# EUROPÄISCHE PATENTSCHRIFT

(11) **EP 1 840 018 B1**
(45) Veröffentlichungstag und Bekanntmachung des Hinweises auf die Patenterteilung: **23.12.2009**
(21) Anmeldenummer: 06119169.8
(22) Anmeldetag: 18.08.2006
(51) Int. Cl.: B62D 55/116

(54) **Raupenlaufwerk**
Crawler carriage
Chariot à chenilles

(30) Priorität: 30.03.2006 DE 102006015153
(43) Veröffentlichungstag der Anmeldung: 03.10.2007
(73) Patentinhaber: CLAAS Industrietechnik GmbH, 33106 Paderborn (DE)
(72) Erfinder: Satzler, Robert, Princeville, IL 61559 (US); Janzen, David C., Metamora, IL 61548 (US)

(56) Entgegenhaltungen:
- EP-A- 0 597 350
- EP-A- 0 631 926
- WO-A-93/25429
- US-A- 2 584 512
- US-A- 3 447 620

## Beschreibung

Die Erfindung betrifft ein Raupenlaufwerk für Fahrzeuge nach dem Oberbegriff des Anspruchs 1.

Aus der DE 1 205 844 ein Gleisbandfahrwerk bekannt, das aus zwei ineinandergeschobenen Schwinghebeln besteht, die auf einem Bolzen als gemeinsamen Drehpunkt gelagert sind. An den Enden der beiden Schwinghebel sind Fahrwerkräder gelagert, die von einem endlosen Gleisband umschlungen werden. Zwischen den beiden Schwinghebeln ist eine Druckfeder angeordnet, die die Schwinghebel gegeneinander abstützt und eine begrenzte Bewegung der Schwinghebel zueinander zulässt.

Nachteilig bei diesem bekannten Gleisbandlaufwerk ist, dass das bekannte Gleisbandlaufwerk die Masse des Fahrzeuges beim Überfahren eines Hindernisses nicht gleichmäßig verteilt auf den Boden übertragen kann.

Aus der US 3,447,620 ist ein Gleisbandfahrwerk gemäß dem Oberbegriff des Anspruches 1 bekannt. Dieses Gleisbandfahrwerk ist verstellbar ausgeführt, um mit höchstmöglicher Geschwindigkeit über einen unebenen Untergrund zu fahren oder aber um eine möglichst große Bodenfreiheit am Gleisbandfahrwerk einzustellen. Hierzu ist der vordere Abschnittes des endlosen Gleisbandes um einen Winkel zur Horizontalen verstellbar, so dass wahlweise die Gleisband vollständig auf dem Untergrund aufsteht, um mit hoher Geschwindigkeit fahren zu können, oder abschnittsweise unter einem Anstellwinkel geneigt ist, um Hindernisse besser überfahren zu können. Nachtellig an diesem Gleisbandfahrwerk ist, dass auch dieses Gleisbandfahrwerk nicht dazu geeignet ist, die Masse des Fahrzeuges beim Überfahren eines Hindernisses gleichmäßig auf den Boden verteilt zu übertragen.

Die WO 93/25429 beschreibt ein geländegängiges Fahrzeug mit einem Paar schwenkbar an einem Rahmen des Fahrzeuges angeordneter Gleiskettenfahrwerke, die jeweils ein Paar hinterer Antriebsräder und ein Paar vorderer Räder aufweisen. Die Glelskettenfahrwerke sind unabhängig voneinander in ihrer Neigung verstellbar, um beim Überfahren von Hindernissen die aufwärts gerichtete Bewegung nicht auf den Rahmen des Fahrzeuges zu übertragen. Jedoch ist auch dieses Gleiskettenfahrwerk nicht dazu geeignet, eine gleichmäßige Verteilung der Fahrzeugmasse auf den Boden beim Überfahren eines Hindernisses zu erreichen.

Der Erfindung liegt daher die Aufgabe zugrunde, die Nachteile des Standes der Technik zu vermeiden und insbesondere ein Raupenfahrwerk zu schaffen, bei dem das Raupenfahrwerk die Masse des Fahrzeugs auch beim Überfahren eines Hindernisses oder beim Befahren von unebenen Untergrund auf der gesamten Aufstandsfläche durch gleichmäßige Bodenbelastung bodenschonend auf den Untergrund überträgt.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Dadurch, dass zumindest der erste Teilrahmen schwenkbar an dem Fahrzeug angeordnet ist und wobei der wenigstens eine weitere Teilrahmen schwenkbar an dem ersten Teilrahmen angeordnet ist, wird sichergestellt, dass das Gewicht des Fahrzeugs auch beim Befahren von unebenem Untergrund oder beim Überfahren eines Hindernisses durch gleichmäßige Bodenbelastung bodenschonend auf den Untergrund übertragen wird.

In einer vorteilhaften Ausgestaltung der Erfindung ist der erste Teilrahmen um eine erste Schwenkachse schwenkbar an dem Fahrzeug angeordnet ist und der weitere Teilrahmen um eine zweite Schwenkachse verschwenkbar an dem ersten Teilrahmen angeordnet, wodurch sich ein einfacher, gut montierbarer Aufbau des Raupenlaufwerks ergibt.

Dadurch, dass die erste Schwenkachse vorteilhafterweise annähernd mittig zwischen den Laufrädern angeordnet ist, ergibt sich eine symmetrische Anordnung des Raupenfahrwerks an dem Fahrzeug.

In weiterer vorteilhafter Ausgestaltung der Erfindung ist die zweite Schwenkachse außermittig zwischen den Laufrädern im Bereich der Laufräder angeordnet, wobei die zweite Schwenkachse näher zur Drehachse des Laufrades am weiteren Teilrahmen als zur Drehachse des Laufrades am ersten Teilrahmen angeordnet ist, so dass Laufrad am weiteren Teilrahmen über einen kurzen Hebel am ersten Teilrahmen angelenkt ist.

Indem zwischen dem ersten Teilrahmen und dem weiteren Teilrahmen wenigstens ein Dämpfungselement angeordnet ist, wobei das Dämpfungselement mit dem ersten und dem zweiten Teilrahmen verbunden ist, werden die Schwingungen im Raupenlaufwerk unterdrückt, beziehungsweise können die Schwingungen im Raupenlaufwerk schneller abklinken.

In einer vorteilhaften Ausgestaltung der Erfindung ist das Dämpfungselement oberhalb und/oder unterhalb der zweiten Drehachse an den Teilrahmen angelenkt, so dass die Schwingungen des ausgelenkten zweiten Teilrahmens unterdrückt werden.

In einer vorteilhaften Ausgestaltung der Erfindung ist das Dämpfungselement als Kolben-Zylindereinheit ausgeführt, um eine von der Auslenkgeschwindigkeit der Laufräder abhängige, effektive Dämpfung zu erzielen.

Um die durch den unebenen Untergrund in das Raupenlaufwerk eingeleiteten Stöße abzufangen, ist in vorteilhafter Weiterbildung der Erfindung zwischen dem ersten Teilrahmen und dem zweiten Teilrahmen wenigstens ein Federelement angeordnet, wobei das Federelement als elastisches Gummielement ausgeführt ist.

In der Erfindung umfasst das Raupenlaufwerk eine Stützrollenanordnung wobei die Stützrollenanordnung schwenkbeweglich an einem der Teilrahmen angeordnet ist und von einem an diesem oder dem zweiten Teilrahmen angelenkten Dämpfungssystem vorgespannt wird, kann sich das Raupenfahrwerk flexibel an den unebenen Untergrund anpassen.

Das Dämpfungssystem ist in einer vorteilhaften Ausgestaltung der Erfindung gestellfest an dem Teilrahmen angeordnet, so dass das Dämpfungssystem beim Austausch der Stützrollenanordnung am Teilrahmen verbleibt.

Dadurch, dass die Anbindung des Dämpfungssystem oberhalb oder unterhalb der ersten Schwenkachse an dem jeweiligen Teilrahmen erfolgt, kann ein Dämpfungssystem bauraumsparend zwischen den Laufrädern angeordnet werden.

Um die Anpassbarkeit der Stützrollenanordnung an einen unebenen Untergrund zu optimieren, ist in der Erfindung die Stützrollenanordnung um eine dritte Schwenkachse schwenkbar an einem Zwischenrahmen angeordnet, wobei der Zwischenrahmen schwenkbar an wenigstens einem Teilrahmen angeordnet ist.

Eine über die Aufstandsfläche des Raupenfahrwerks vergleichmäßigte Übertragung der Stützlasten des Fahrzeugs auf den Untergrund ergibt sich dadurch, dass die dritte Schwenkachse annähernd mittig zwischen den Laufrädern im Bereich zwischen den Laufrädern und unterhalb der ersten Schwenkachse sowie unterhalb der zweiten Schwenkachse angeordnet ist.

Um den Anpressdruck des Raupenlaufbandes auf den Untergrund zu erhöhen, weist die Stützrollenanordnung vorteilhafterweise ein Pendel mit mehreren Stützrollen auf, wobei das Pendel schwenkbeweglich mit dem Zwischenrahmen verbunden ist.

Weitere vorteilhafte Ausgestaltungen sind Gegenstand weiterer Unteransprüche und werden nachfolgend an Hand der in mehreren Figuren dargestellten Ausführungsbeispiele näher erläutert.

Es zeigen:
- Fig.1: eine Seitenansicht eines mit erfindungsgemäßen Raupenlaufwerken ausgestatteten Mähdreschers,
- Fig.2: eine Seitenansicht eines erfindungsgemäßen Raupenlaufwerks,
- Fig.3: eine zweite erfindungsgemäße Ausführung des Raupenfahrwerk.
- Fig.4: eine weitere, erfindungsgemäße Ausführung des Raupenlaufwerks.

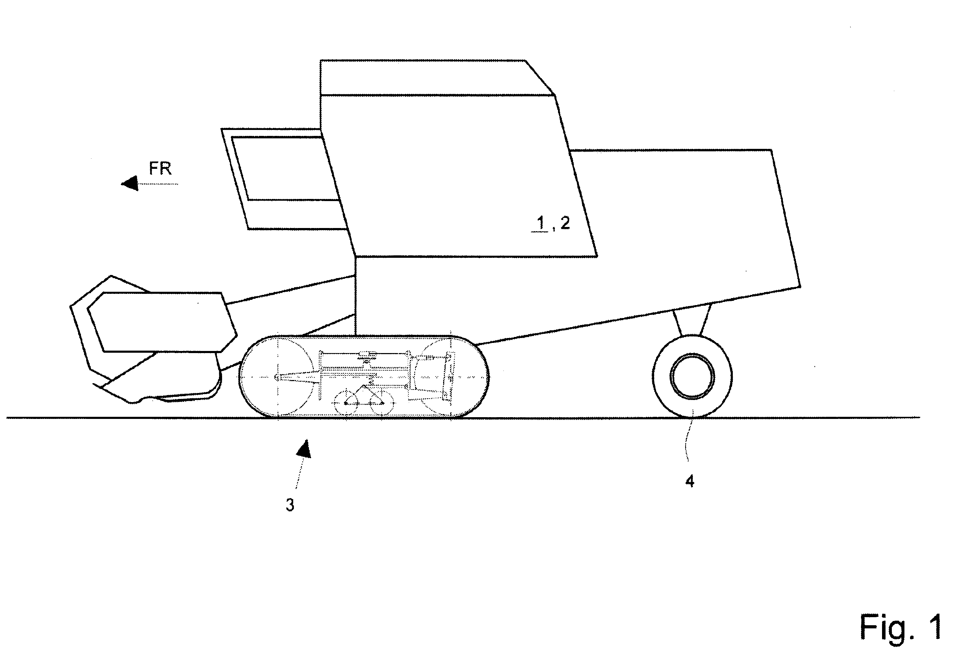

In Fig. 1 ist eine Seitenansicht eines als Mähdrescher 1 ausgeführten Fahrzeugs 2 dargestellt. Im vorderen Bereich sind anstelle der ansonsten üblicherweise verwendeten Räder beidseitig Raupenfahrwerke 3 am Mähdrescher 1 angeordnet. Die Raupenfahrwerke 3 bilden zusammen mit zwei lenkbaren Rädern 4 im hinteren Bereich des Mähdreschers 1 das Fahrwerk des Mähdreschers 1.

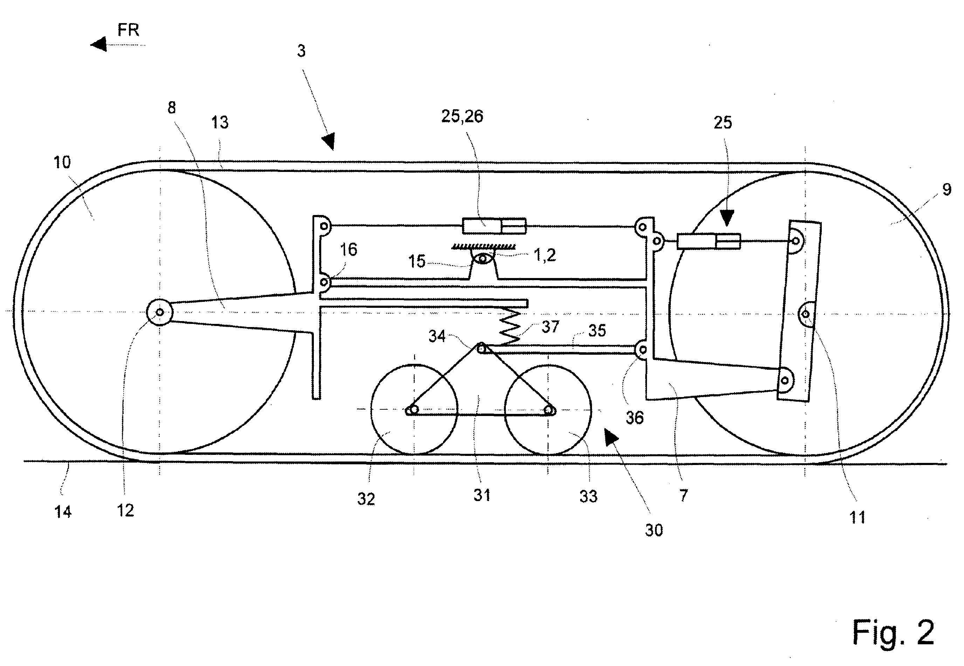

Fig. 2 zeigt eine vergrößerte schematische Seitenansicht einer ersten Ausführung eines erfindungsgemäßen Raupenfahrwerks 3. Das Raupenfahrwerk 3 weist einen ersten verschwenkbaren Teilrahmen 7 und einen weiteren verschwenkbaren Teilrahmen 8 auf, an deren freien Enden jeweils ein Laufrad 9, 10 um eine Drehachse 11, 12 drehbar gelagert ist. Die beiden Laufräder 9, 10 werden von einem endlosen Raupenlaufband 13 umschlungen.
Damit das Raupenlaufband 13 auch beim Befahren von unebenen Untergrund eine möglichst große Aufstandsfläche behält, um das Gewicht des Mähdreschers 1 durch gleichmäßige Bodenbelastung bodenschonend auf den Untergrund 14 zu übertragen, ist erfindungsgemäß der erste Teilrahmen 7 schwenkbar an dem Mähdrescher 1 angeordnet und der weitere Teilrahmen 8 schwenkbar an dem ersten Teilrahmen 7 angeordnet.
Der erste Teilrahmen 7 ist um eine erste, quer zur Fahrtrichtung FR des Mähdreschers 1 verlaufenden ersten Schwenkachse 15 schwenkbar an dem Mähdrescher 1 angeordnet, wobei die erste Schwenkachse annähernd mittig zwischen den Laufrädern 9, 10 angeordnet ist. Der zweite Teilrahmen 8 ist um eine parallel zur ersten Schwenkachse 15 verlaufenden weiteren Schwenkachse 16 verschwenkbar mit dem ersten Teilrahmen 7 verbunden, wobei die zweite Schwenkachse 16 näher an der Drehachse 12 des Laufrades 10 am weiteren Teilrahmen 8 als zur Drehachse 11 des Laufrades 9 am ersten Teilrahmen 7 angeordnet ist.
Beim Überfahren eines Hindernisses oder beim Befahren eines unebenen Untergrunds wird der weitere Teilrahmen 8 permanent gegenüber dem ersten Teilrahmen 7 um die zweite Schwenkachse 16 verschwenkt, wodurch sich die Lage des Laufrades 10 und damit dessen Drehachse 12 bezüglich der Schwenkachsen 15, 16 ändert.
Oberhalb der zweiten Drehachse 16 ist zwischen dem ersten Teilrahmen 7 und dem weiteren Teilrahmen 8 ein als Kolben-Zylindereinheit 25 ausgeführtes Dämpfungselement 26 angeordnet, das kolbenstangenseitig gelenkig mit dem ersten Teilrahmen 7 und kolbenstangenseitig gelenkig mit dem weiteren Teilrahmen 8 verbunden ist. Die Kolben-Zylindereinheit 25 kann beispielsweise als ein mit Öl befülltes, hydraulisches Dämpfungselement 26 oder als ein mit Gas befülltes, pneumatisches Dämpfungselement 26 ausgeführt sein.
Es liegt im Rahmen der Erfindung mehrere Dämpfungselemente 26 zwischen dem ersten Teilrahmen 7 und dem zweiten Teilrahmen 8 anzuordnen, die oberhalb und/oder unterhalb der zweiten Schwenkachse 16 an die Teilrahmen 7, 8 angelenkt sein können.
Im dargestellten Ausführungsbeispiel ist an dem ersten Teilrahmen 7 eine Stützrollenanordnung 30 angeordnet, die aus einem Pendel 31 mit mehreren in Fahrtrichtung FR des Mähdreschers 1 hintereinander angeordneten Stützrollen 32, 33 besteht. Das Pendel 31 ist um eine dritte Schwenkachse 34 schwenkbar mit einem Zwischenrahmen 35 verbunden, der seinerseits um eine vierte Schwenkachse 36 höhenverschwenkbar mit dem ersten Teilrahmen 7 verbunden ist. Die dritte Schwenkachse 34 ist annähernd mittig zwischen den Laufrädern 7, 8 im Bereich der Laufräder 7, 8 unterhalb der ersten Schwenkachse 15 und der zweiten Schwenkachse 16 angeordnet.
Zwischen dem Zwischenrahmen 35 und dem weiteren Teilrahmen 8 ist unterhalb der ersten Schwenkachse 15 ein weiteres Dämpfungssystem 37 gestellfest an dem Teilrahmen 8 angeordnet, welches die Stützrollenanordnung 30 vorspannt und das die bei unebenen Untergrund auf die Stützrollenanordnung 30 übertragenen Stöße abfängt. Es ist eine Ausführung denkbar bei der die Stützrollenanordnung 30 verschwenkbar an einem der Teilrahmen 7, 8 angeordnet ist und die Stützrollenanordnung 30 mit dem Dämpfungselement 37 vorgespannt wird.
Das an dem ersten Teilrahmen 7 gelagerte Laufrad 9 ist über eine an sich bekannte und daher hier nicht näher erläuterte Spannvorrichtung 38 derart relativ zu dem am weiteren Teilrahmen 8 gelagerten Laufrad 10 in seiner Lage veränderbar, dass das die beiden Laufräder 9, 10 umschlingende Raupenlaufband 13 gespannt werden kann.
Es liegt weiter im Rahmen der Erfindung das entweder eines oder beide Laufräder 9, 10 des dargestellten Raupenfahrwerks 3 angetrieben werden können, wobei das oder die angetriebenen Laufräder 9, 10 das Raupenlaufband 13 form- und oder reibschlüssig antreiben können.

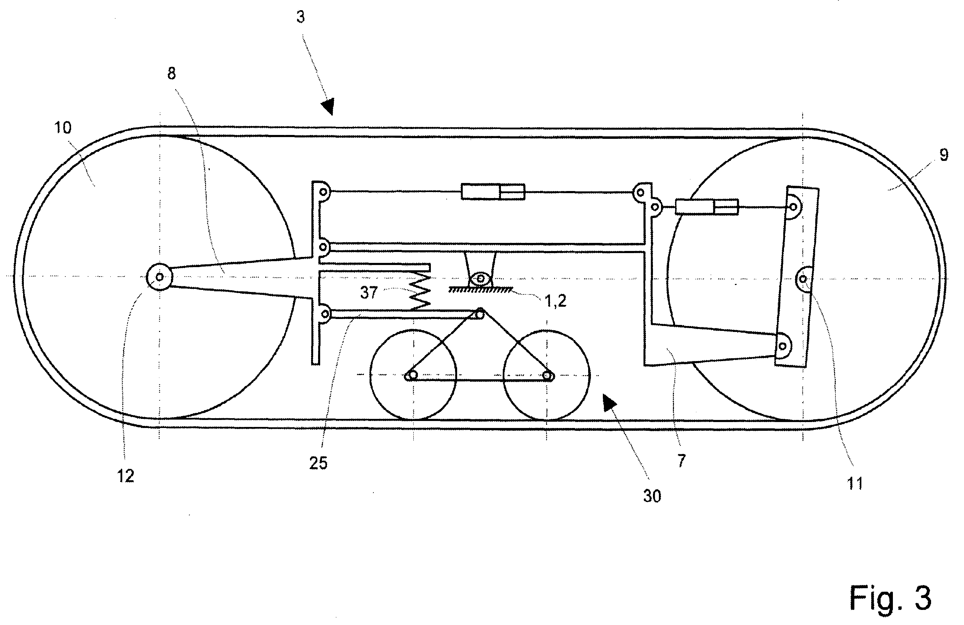

Bei der in Fig. 3 dargestellten, zweiten Ausführung eines erfindungsgemäßen Raupenfahrwerks 3 ist im Unterschied zur ersten Ausführung aus Fig. 2 die Stützrollenanordnung 30 an dem weiteren Teilrahmen 8 angeordnet. Das weitere Federelement 37 ist bei diesem Raupenfahrwerk 3 zwischen dem Zwischenrahmen 35 und dem weiteren Teilrahmen 8 angeordnet.

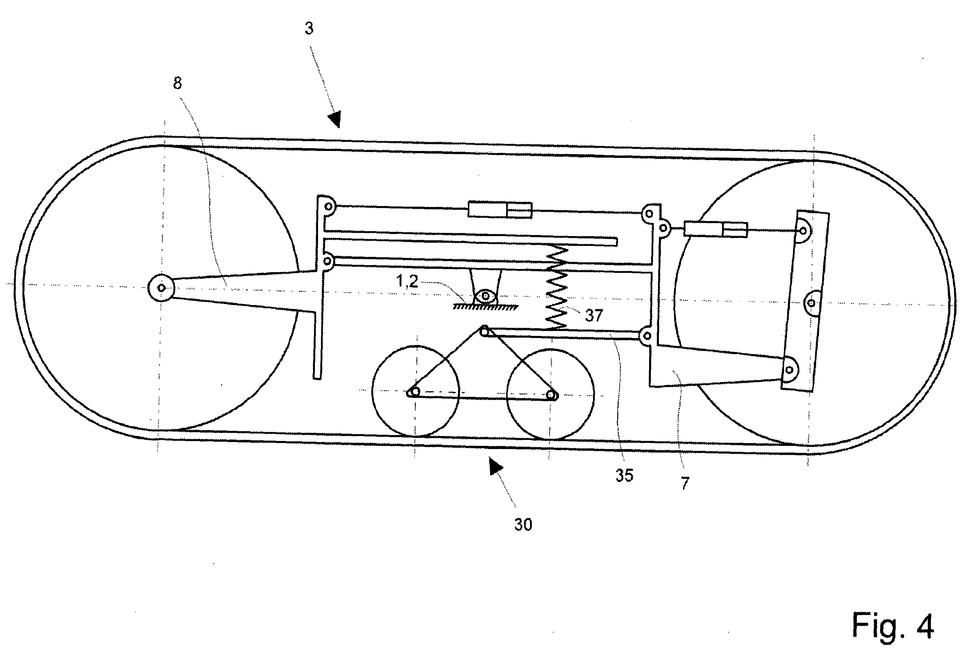

In Fig. 4 ist eine dritte Ausführung eines erfindungsgemäßen Raupenfahrwerks 3 dargestellt. Die Stützrollenanordnung 30 ist wie bei der ersten Ausführung aus Fig. 2 am ersten Teilrahmen 7 angeordnet. Das Federelement 37 ist ebenfalls zwischen dem Zwischenrahmen 35 und dem weiteren Teilrahmen 8 angeordnet, wobei sich das Federelement 37 von einem ersten Bereich unterhalb des ersten Teilrahmens 7 bis zu einem weiteren Bereich oberhalb des ersten Teilrahmens 7 erstreckt und wobei das Federelement 37 den ersten Teilrahmen 7 durchdringt.

Es ist ebenso denkbar, das erfindungsgemäße Raupenfahrwerk 3 an der Vorder-und/oder Hinterachse eines als Traktor ausgeführten Fahrzeugs 2 anzuordnen.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

- 1: Mähdrescher
- 2: Fahrzeug
- 3: Raupenfahrwerk
- 4: lenkbare Räder
- 7: erster Teilrahmen
- 8: zweiter Teilrahmen
- 9: Laufrad
- 10: Laufrad
- 11: Drehachse
- 12: Drehachse
- 13: Raupenlaufband
- 14: Untergrund
- 15: erste Schwenkachse
- 16: zweite Schwenkachse
- 25: Kolben-Zylindereinheit
- 26: Dämpfungselement
- 30: Stützrollenanordnung
- 31: Pendel
- 32: Stützrolle
- 33: Stützrolle
- 34: dritte Schwenkachse
- 35: Zwischenrahmen
- 36: Vierte Schwenkachse
- 37: Dämpfungselement
- 38: Spannvorrichtung

- FR: Fahrtrichtung

## Patentansprüche

1. Raupenlaufwerk (3) für ein Fahrzeug (1, 2) mit wenigstens einem ersten schwenkbaren Teilrahmen (7) und wenigstens einem weiteren schwenkbaren Teilrahmen (8), die jeweils zumindest ein Laufrad (9, 10) drehbar aufnehmen, wobei zumindest der erste Teilrahmen (7) schwenkbar an dem Fahrzeug (1, 2) angeordnet ist und wobei der wenigstens eine weitere Teilrahmen (8) schwenkbar an dem ersten Teilrahmen (7) angeordnet ist
**dadurch gekennzeichnet,**
**dass** das Raupenlaufwerk (3) eine Stützrollenanordnung (30) umfasst, wobei die Stützrollenanordnung (30) um eine dritte Schwenkachse (34) schwenkbar an einem Zwischenrahmen (35) angeordnet ist, wobei der Zwischenrahmen (35) schwenkbar an wenigstens einem Teilrahmen (7, 8) angeordnet ist.

2. Raupenlaufwerk nach Anspruch 1,
**dadurch gekennzeichnet,**
**dass** der erste Teilrahmen (7) um eine erste Schwenkachse (15) schwenkbar an dem Fahrzeug (1, 2) angeordnet ist und der weitere Teilrahmen (8) um eine zweite Schwenkachse (16) verschwenkbar an dem ersten Teilrahmen (7) angeordnet ist.

3. Raupenlaufwerk nach Anspruch 2,
**dadurch gekennzeichnet,**
**dass** die erste Schwenkachse (15) annähernd mittig zwischen den Laufrädern (9, 10) angeordnet ist.

4. Raupenlaufwerk nach Anspruch 2,
**dadurch gekennzeichnet,**
**dass** die zweite Schwenkachse (16) außermittig zwischen den Laufrädern (9,10) im Bereich der Laufräder (9, 10) angeordnet ist, wobei die zweite Schwenkachse (16) näher zur Drehachse (12) des Laufrades (10) am weiteren Teilrahmen (8) als zur Drehachse (11) des Laufrades (9) am ersten Teilrahmen (7) angeordnet ist.

5. Raupenlaufwerk nach wenigstens einem der vorhergehenden Ansprüche,
**dadurch gekennzeichnet,**
**dass** zwischen dem ersten Teilrahmen (7) und dem weiteren Teilrahmen (8) wenigstens ein Dämpfungselement (26) angeordnet ist, wobei das Dämpfungselement (26) mit dem ersten Teilrahmen (7) und dem zweiten Teilrahmen (8) verbunden ist.

6. Raupenlaufwerk nach Anspruch 5,
**dadurch gekennzeichnet,**
**dass** das Dämpfungselement (26) oberhalb und/oder unterhalb der zweiten Drehachse (16) an den Tellrahmen (7, 8) angelenkt ist.

7. Raupenlaufwerk nach wenigstens einem der Ansprüche 5 oder 6,
**dadurch gekennzeichnet,**
**dass** das Dämpfungselement (26) eine Kolben-Zylindereinheit (25) ist.

8. Raupenlaufwerk nach wenigstens einem der vorhergehenden Ansprüche,
**dadurch gekennzeichnet,**
**dass** die Stützrollenanordnung (30) schwenkbeweglich an einem der Teilrahmen (7, 8) angeordnet ist und eine von einem an diesem oder dem weiteren Teilrahmen (8, 7) angelenkten Dämpfungssystem (37) vorgespannt wird.

9. Raupenlaufwerk nach Anspruch 8,
**dadurch gekennzeichnet,**
**dass** das Dämpfungssystem (37) gestellfest an dem Teilrahmen (7, 8) angeordnet ist.

10. Raupenlaufwerk nach wenigstens einem der Ansprüche 8 oder 9,
**dadurch gekennzeichnet,**
**dass** die Anbindung des Dämpfungssystems (37) oberhalb oder unterhalb der ersten Schwenkachse (15) an dem jeweiligen Teilrahmen (7, 8) erfolgt.

11. Raupenlaufwerk nach wenigstens einem der Ansprüche 2-4,
**dadurch gekennzeichnet,**
**dass** die dritte Schwenkachse (34) annähernd mittig zwischen den Laufrädern (7, 8) im Bereich zwischen den Laufrädern (9, 10) und unterhalb der ersten Schwenkachse (15) sowie unterhalb der zweiten Schwenkachse (16) angeordnet Ist.

12. Raupenlaufwerk nach wenigstens einem der vorhergehenden Ansprüche,
**dadurch gekennzeichnet,**
**dass** die Stützrollenanordnung (30) ein Pendel (31) mit mehreren Stützrollen (32, 33) aufweist, wobei das Pendel (31) schwenkbeweglich mit dem Zwischenrahmen (35) verbunden ist.

## Claims

1. A crawler running gear (3) for a vehicle (1, 2) comprising at least one first pivotable subframe (7) and at least one further pivotable subframe (8) which each rotatably accommodate at least one track wheel (9, 10), wherein at least the first subframe (7) is arranged pivotably on the vehicle (1, 2) and wherein the at least one further subframe (8) is arranged pivotably on the first subframe (7),
**characterised in that**
the crawler running gear (3) includes a support roller arrangement (30), wherein the support roller arrangement (30) is arranged on an intermediate frame (35) pivotably about a third pivot axis (34), the intermediate frame (35) being arranged pivotably on at least one subframe (7, 8).

2. A crawler running gear according to claim 1 **characterised in that** the first subframe (7) is arranged on the vehicle (1, 2) pivotably about a first pivot axis (15) and the further subframe (8) is arranged on the first subframe (7) pivotably about a second pivot axis (16).

3. A crawler running gear according to claim 2 **characterised in that** the first pivot axis (15) is arranged approximately centrally between the track wheels (9, 10).

4. A crawler running gear according to claim 2 **characterised in that** the second pivot axis (16) is arranged off-centre between the track wheels (9, 10) in the region of the track wheels (9, 10), wherein the second pivot axis (16) is arranged closer to the axis of rotation (12) of the track wheel (10) on the further subframe (8) than to the axis of rotation (11) of the track wheel (9) on the first subframe (7).

5. A crawler running gear according to at least one of the preceding claims **characterised in that** at least one damping element (26) is arranged between the first subframe (7) and the further subframe (8), wherein the damping element (26) is connected to the first subframe (7) and the second subframe (8).

6. A crawler running gear according to claim 5 **characterised in that** the damping element (16) is pivotably mounted to the subframes (7, 8) above and/or below the second axis of rotation (16).

7. A crawler running gear according to at least one of claims 5 and 6 **characterised in that** the damping element (26) is a piston-cylinder unit (25).

8. A crawler running gear according to at least one of the preceding claims **characterised in that** the support roller arrangement (30) is arranged pivotably on one of the subframes (7, 8) and is biased by a damping system (37) pivotably mounted thereto or to the further subframe (8, 7).

9. A crawler running gear according to claim 8 **characterised in that** the damping element (37) is arranged on the subframe (7, 8) fixedly in relation to the frame structure.

10. A crawler running gear according to at least one of claims 8 and 9 **characterised in that** the damping system (37) is connected to the respective subframe (7, 8) above or below the first pivot axis (15.

11. A crawler running gear according to at least one of claims 2 to 4 **characterised in that** the third pivot axis (34) is arranged approximately centrally between the track wheels (7, 8) in the region between the track wheels (9, 10) and below the first pivot axis (15) and below the second pivot axis (16).

12. A crawler running gear according to at least one of the preceding claims **characterised in that** the support roller arrangement (30) has a swing arrangement (31) with a plurality of support rollers (32, 33), wherein the swing arrangement (31) is pivotably connected to the intermediate frame (35).

## Revendications

1. Train de roulement à chenilles (3) pour un véhicule (1, 2), comportant au moins un premier châssis partiel (7) pouvant basculer et au moins un autre châssis partiel (8) pouvant également basculer, chacun de ces châssis accueillant au moins une roue porteuse (9, 10) montée en rotation, au moins le premier châssis (7) étant monté basculant sur le véhicule (1, 2) tandis que l'autre châssis partiel (8) au nombre d'un au moins est monté basculant sur le premier châssis partiel (7), ce chariot étant **caractérisé en ce qu'**il comprend (3) un système de rouleaux d'appui (30) qui est monté basculant autour d'un troisième axe de basculement (34) disposé sur un châssis intermédiaire (35) qui lui-même est monté basculant sur au moins un châssis partiel (7, 8).

2. Train de roulement à chenilles selon la revendication 1, **caractérisé en ce que** le premier châssis partiel (7) est monté basculant sur le véhicule (1, 2) autour d'un premier axe de basculement (15) tandis que l'autre châssis partiel (8) est monté basculant sur le premier châssis partiel (8) autour d'un second axe de basculement (16).

3. Train de roulement à chenilles selon la revendication 2, **caractérisé en ce que** le premier axe de basculement (15) est disposé entre les roues porteuses (9, 10), à peu près au milieu.

4. Train de roulement à chenilles selon la revendication 2, **caractérisé en ce que** le second axe de basculement (16) est disposé dans la zone des roues porteuses (9, 10) en étant excentré par rapport à ces roues, ce second axe de basculement (16) étant plus proche de l'axe de rotation (12) de la roue porteuse (10) montée sur le second châssis partiel (8) que de l'axe de rotation (11) de la roue porteuse (9) montée sur le premier châssis partiel (7).

5. Train de roulement à chenilles selon au moins une des revendications précédentes, **caractérisé en ce qu'**entre le premier châssis partiel (7) et le second châssis partiel (8) est disposé au moins un élément amortisseur (26) qui est relié au premier châssis partiel (7) et au second châssis partiel (8).

6. Train de roulement à chenilles selon la revendication 5, **caractérisé en ce que** l'élément amortisseur (26) est relié au châssis partiel (7, 8) par une articulation située au-dessus et/ou en dessous du second axe de basculement (16).

7. Train de roulement à chenilles selon au moins une des revendications 5 et 6, **caractérisé en ce que** l'élément amortisseur (26) est une unité à cylindre et piston.

8. Train de roulement à chenilles selon au moins une des revendications précédentes, **caractérisé en ce que** le système de rouleaux d'appui (30) est monté basculant sur un des châssis partiels (7, 8) et il est précontraint par un système amortisseur (37) articulé sur ce châssis ou sur l'autre châssis (8, 7).

9. Train de roulement à chenilles selon la revendication 8, **caractérisé en ce que** le système amortisseur (37) est monté fixe sur le châssis partiel (7, 8).

10. Train de roulement à chenilles selon au moins une des revendications 8 et 9, **caractérisé en ce que** la liaison du système amortisseur (37) avec le châssis partiel (7, 8) est située au-dessus ou en dessous du premier axe de basculement (15).

11. Train de roulement à chenilles selon au moins une des revendications 2 à 4, **caractérisé en ce que** le troisième axe de basculement (34) est disposé à peu près au milieu entre les roues porteuses (7, 8), dans la zone située entre les roues porteuses (9, 10) et en dessous à la fois du premier axe de basculement (15) et du second axe de basculement (16).

12. Train de roulement à chenilles selon au moins une des revendications précédentes, **caractérisé en ce que** le système de rouleaux d'appui (30) présente un élément pendulaire (31) qui porte plusieurs rouleaux d'appui (32, 33) et qui peut basculer avec le châssis intermédiaire (35).
